# EUROPEAN PATENT APPLICATION

(11) **EP 0 954 161 A2**
(43) Date of publication of application: **03.11.1999**
(21) Application number: 99201200.5
(22) Date of filing: 19.04.1999
(51) Int. Cl.: H04N 1/08

(54) **Vacuum drum with shaped port edges**

(30) Priority: 29.04.1998 US 69672
(71) Applicant: EASTMAN KODAK COMPANY, Rochester, New York 14650 (US)
(72) Inventor: Bedzyk, Mark D., c/o Eastman Kodak Company, Rochester, New York 14650-2201 (US)
(74) Representative: Parent, Yves

(57) **Abstract**

A vacuum drum (12) is comprised of a stationary inner drum (40) with a vacuum port (50) recessed in a surface of the stationary drum. A rotating outer drum (30) has vacuum holes (32) connecting an inner and outer surface of the rotating outer drum and has a common axis with the stationary inner drum (40). The vacuum port (50) has at least one edge which is not collinear with the axis (31) of the rotating outer drum, which causes the vacuum holes (32) in the outer drum (30) to be exposed in a sequential fashion so that all vacuum holes are not exposed simultaneously.

## Description

### CROSS REFERENCE TO RELATED APPLICATIONS

U.S. Serial No. 09/016,238, filed January 30, 1998, entitled PHOTOGRAPHIC PROCESSING APPARATUS AND METHOD, by Thomas J. Murray, Walter C. Slater and Brian J. Joseph.

### FIELD OF THE INVENTION

This invention relates generally to the field of photography, and in particular to a vacuum drum for scanning images on photographic paper.

### BACKGROUND OF THE INVENTION

In a typical photofinishing operation, a customer delivers one or more rolls of film to a processing laboratory to have them chemically developed, and have hard copies of the images printed. Individual rolls of film are spliced together end to end to form a larger roll, or filmstrip, which is easily handled by automated equipment. Following chemical processing of the roll to produce permanent images on the filmstrips, each image is pre-scanned at high speed to obtain image characteristics, such as color and density. These characteristics are passed to an optical printer which uses the data to adjust exposure conditions such as duration and color filters of an image frame on the developed filmstrip. This image is optically projected onto a photosensitive paper. The exposed photosensitive paper is then chemically developed to yield the final hardcopy prints.

In modern photofinishing operations, images may be scanned to provide digital image files corresponding to each image on the film. These digital image files are usually stored on a recording medium such as a magnetic or optical disk and provided to the customer or made available to the customer over the Internet. The digital image files may be used to provide a hardcopy output using a digital printer which prints the images directly from the scanned data.

During the printing process, a sheet of photographic paper must be transported to an imaging drum and held on the drum with vacuum as the paper is passed under a scanning head. Internally ported drums currently used in some paper handling machines employ a port with linear edges. As a row of vacuum holes pass under the vacuum port edge, all the holes in the row are exposed to vacuum at the same time. The ensuing on-rush of air causes a torque disturbance to the drum's drive. This torque disturbance makes it difficult to maintain the rotating drum at a constant velocity. Velocity variations in the drum introduces image artifacts called "banding" which result in streaks in the finished print, which decrease the quality of the product.

It is desirable to have a vacuum drum ported in such a fashion that an entire row of vacuum holes is not uncovered simultaneously or covered simultaneously.

### SUMMARY OF THE INVENTION

It is an object of the present invention to expose vacuum holes in a vacuum drum sequentially rather than simultaneously to minimize variations in the velocity of the rotating drum.

The present invention is directed to overcoming one or more of the problems set forth above. Briefly summarized according to one aspect of the present invention, a vacuum drum is comprised of a stationary inner drum with a vacuum port recessed in a surface of the stationary drum. The vacuum port connects a vacuum contained in an interior of the stationary inner drum with a surface of the inner drum. A rotating outer drum, which has a common axis with the stationary inner drum, has vacuum holes connecting an inner and an outer surface of the rotating outer drum. The vacuum port has at least one edge which is not collinear with the axis of the rotating outer drum. The non-collinear edge exposes the vacuum holes in the outer drum in a sequential fashion so that all vacuum holes are not exposed simultaneously.

The above, and other objects, advantages and novel features of the present invention will become more apparent from the accompanying detailed description thereof when considered in conjunction with the following drawings.

### BRIEF DESCRIPTION OF THE DRAWINGS

Fig. 1 is a perspective view of a slow scan module for a photographic scanner;
Fig. 2 is s perspective view, partially cut-away, of the vacuum drum of the slow scan module shown in Fig. 1;
Fig. 3 is a cross-sectional view along lines B-B of the vacuum drum shown in Fig. 2;
Fig.4 is a close-up view of area C of Fig. 3;
Fig. 5 is a plan view of the surface of vacuum drum shown in Fig. 2;
Fig. 6 is a plan view of the vacuum port of the vacuum drum shown in Fig. 2;
Fig. 7 is a cross-sectional view of the vacuum drum shown in Fig. 2 illustrating exit figure guides.
Fig. 8 is a perspective view, partially cut-away, of an alternate embodiment of a vacuum drum according to the present invention;
Fig. 9 is a plan view of an alternative embodiment of a vacuum port;
Fig. 10 is a plan view of another embodiment of a vacuum port;
Fig. 11 is a plan view of yet another embodiment of a vacuum port;
Fig. 12 is a plan view of a further embodiment of a vacuum port; and
Fig. 13 is a plan view of an additional embodiment of a vacuum port.

### DETAILED DESCRIPTION OF THE INVENTION

The present description will be directed in particular to elements forming part of, or in cooperation more directly with, the apparatus in accordance with the present invention. It is understood that elements not specifically shown or described may take various forms well known to those skilled in the art.

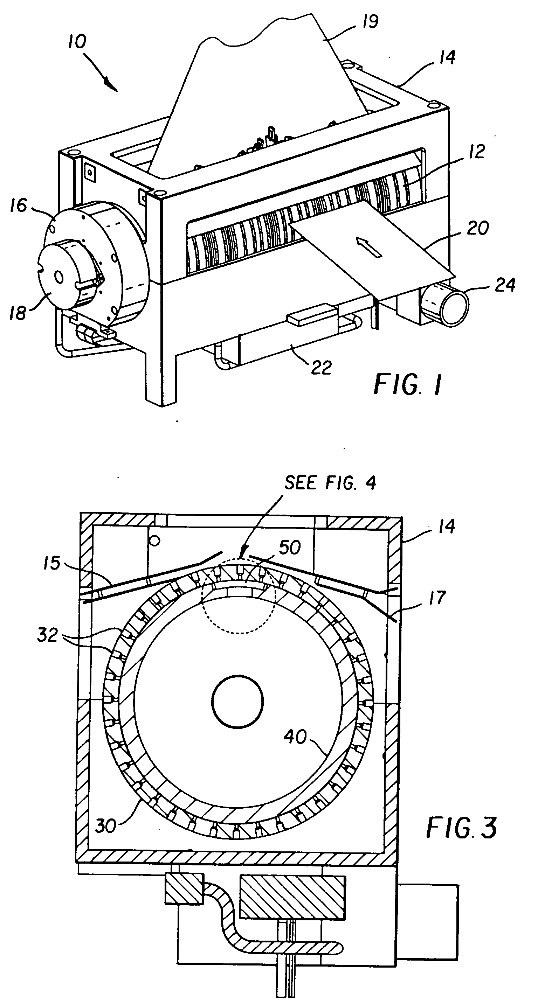

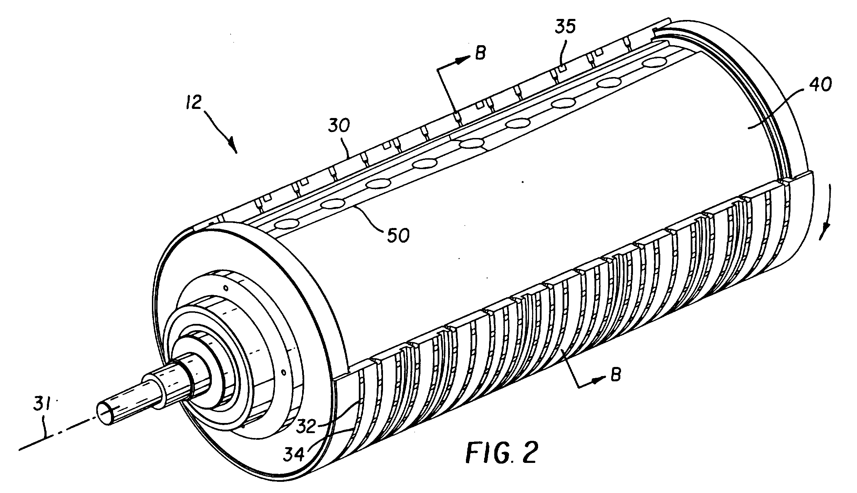

Referring to Fig. 1, a slow scan module is shown designated in general by numeral 10. Slow scan module 10 is comprised in general of a drum 12 housed in a drum frame 14.

Motor 16 turns the drum 12 and a shaft encoder 18 provides velocity feedback information to servo control electronics 22, which controls the speed of the motor 16. A laser scan line 19, which is shown schematically, records information on photographic paper 20. Vacuum source 24 provides vacuum from an external source, not shown, to drum 12.

Referring now to Figs. 2-4, vacuum drum 12 is shown in more detail. Vacuum drum 12 is comprised of a rotating outer drum 30 and a stationary inner drum 40. Outer drum 30 and inner drum 40 are on a common axis 31. Rotating outer drum 30 has holes 32 and grooves 34. Exit guide grooves 35 in conjunction with exit guide fingers 15, shown in Fig. 7, are used to remove photographic paper and are deeper than vacuum grooves 34.

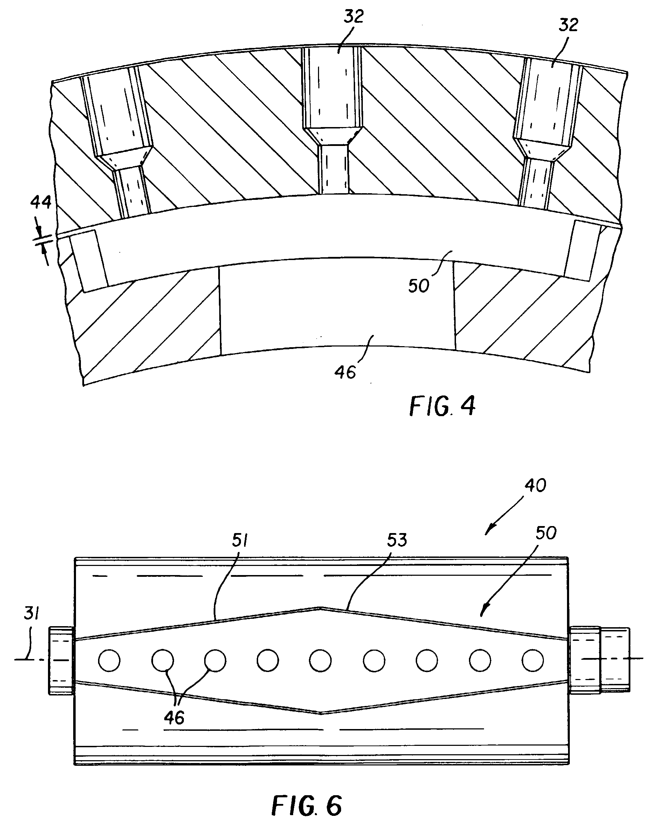

Referring again to Figs. 2-4, fitted within the rotating outer drum 30 is a stationary inner drum 40. The surface of stationary inner drum 40 has a helical edge vacuum port 50 which is recessed into the surface of the stationary inner drum 40. The vacuum port 50 exposes the outer drum 30 to a vacuum maintained in the interior 42 of stationary inner drum 40. A small gap 44, shown in Fig. 4, approximately 0.25 mm, is located between the stationary inner drum 40 and the outer drum 30. Gap 44 permits free motion of the outer drum yet provides sufficient resistance to air flow such that vacuum is ported through the holes 32 in the outer drum only when those holes are positioned above vacuum port 50. Port supply hole 46 connects the interior of stationary inner drum 40 with vacuum port 50.

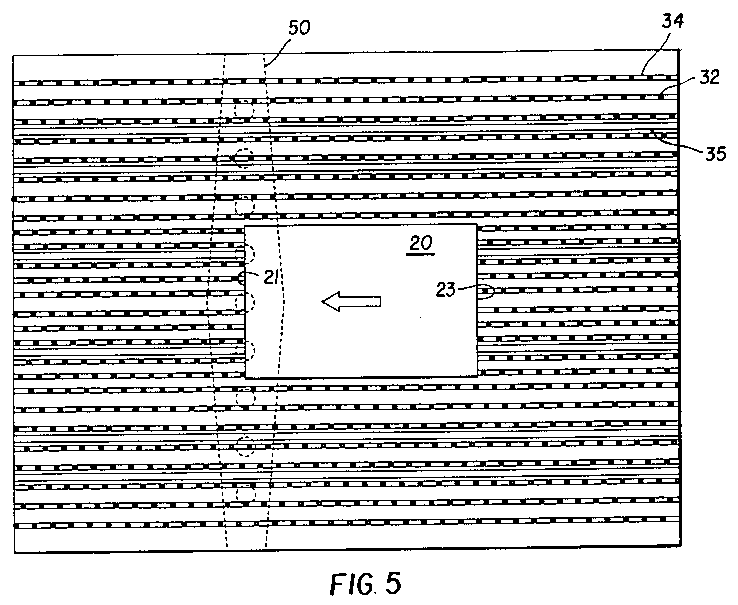

Referring to Fig. 5, it is desirable to have the axial row of holes 32, connected by radial grooves 34, near the lead edge 21 and trail edge 23 of the sheet of photographic paper 20. The force required to conform a flat sheet of the photographic paper to the drum is highest at these edges. In the preferred embodiment, the axial holes are approximately 6 mm apart. This small spacing ensures that maximum vacuum force is applied near the lead and trail edge of a randomly placed sheet of photographic paper. With this configuration, no synchronization of the drum and the paper feed are required to line up a lead edge of the photographic paper with a set of holes.

In the preferred embodiment, the sheet photographic paper is wrapped 30° on the drum. There is no synchronization required between the drum and the input feed mechanism because an axial row of holes is provided every 6 mm around the entire perimeter of the drum. Narrow axial grooves, approximately 0.6 mm wide, may be added to improve the hold down forces at the sheet's edges but are not shown in the figures. These axial grooves, if used, must be narrow so that lead and trail edges of a sheet does not deflect below the drum surface if the sheet edge is over the groove.

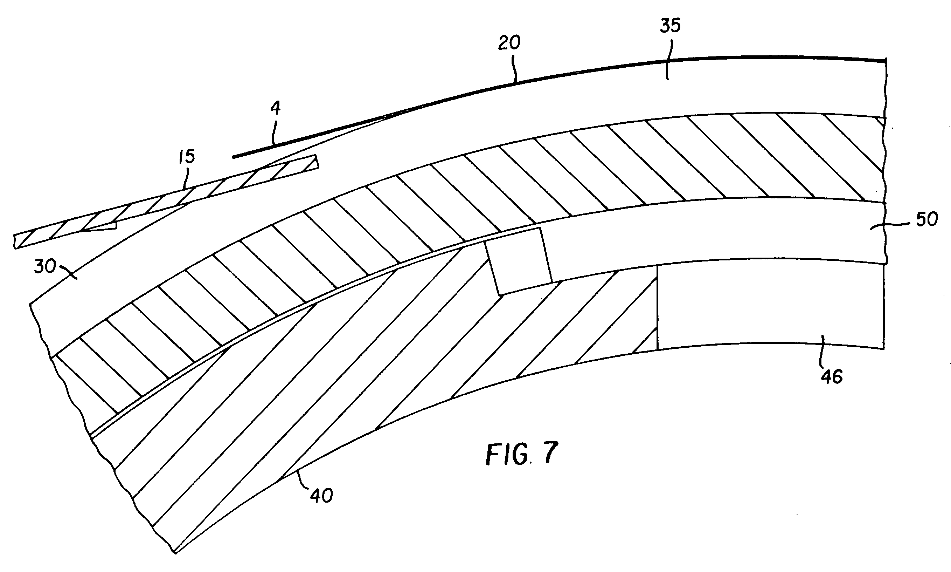

Fig. 6 shows a plan view of stationary inner drum 40. Vacuum port 50 has edges 51 and 53 which are at an angle to the axis of rotation 31 of the outer drum 30. Since the vacuum holes 32 and rotating outer drum 30 are arranged approximately parallel to the axis 31 of the rotating drum and edges 51 and 53 are aligned at an angle to axis 31, vacuum holes 32 are exposed sequentially. This minimizes torque disturbances which would occur in the rotation of the drum if all the vacuum holes in a row where exposed simultaneously.

Fig. 7 is a cross-sectional view which shows exit guide fingers 15 which cooperates with exit guide grooves 35 to lift a leading edge 21 of photographic sheet 20 from the surface of rotating outer drum 30.

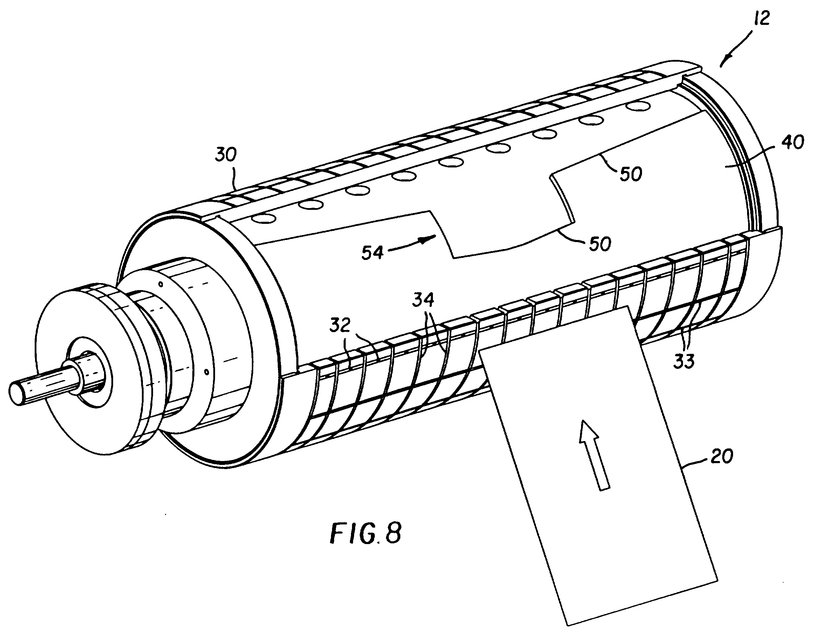

In an alternate embodiment, shown in Fig. 8, the vacuum port 50 is formed with a narrow portion 54 at the entrance and exit of the drum. The narrow portions are used to move the sheet photographic paper to and away from the wider portion where the sheets entire width will be held down for laser printing. The total number of holes open at one time is reduced, thus increasing the vacuum the photographic paper is exposed to by this method.

In this configuration, the hole and groove pattern provides for a 120° wrap on the drum. The input sheet feed is synchronized with a specific axial lead edge vacuum groove 33 on the drum such that the lead edge of the photographic paper is placed just passed the axial lead edge vacuum groove of the drum. In addition to the axial lead edge vacuum grooves, there are axial trail edge vacuum grooves for different photographic paper sheet sizes. A second axial groove and holes is placed just inside of the lead and trail edge grooves providing additional holding force at the lead and trail edges of the sheet photographic paper. Radial vacuum grooves 34 are provided at the edges of the various sheet widths. Additional radial and axial grooves are provided between the perimeter grooves to evacuate any air under the center of the sheet. The drum circumference is sized such that the lead edge grooves become the trial edge grooves for the longest sheet, approximately 457 mm.

The large wrap angle of the second embodiment leads to a large vacuum area. A specific hole and groove pattern was developed to minimize the number of open holes and maximize the vacuum pressure. The smaller wrap angle of the first embodiment permits a continuous and denser pattern of holes and grooves. The total number of open holes in each case is approximately equal and the resulting vacuum pressure applied is also equal.

In yet another embodiment, not shown, the radial grooves are replaced with a narrow, approximately 1.25 mm wide, helical groove with a close pitch 2.5 mm. This increases the groove area under the lead and trail edges. The 0.6 mm wide axial groove mentioned above is required to feed the helical grooves not directly connected to holes.

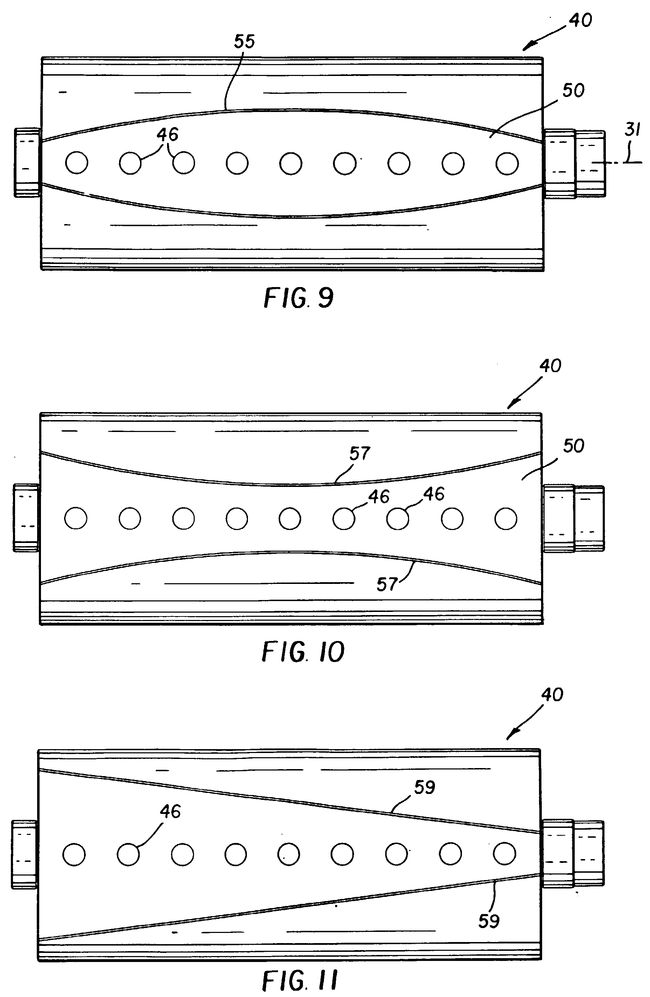

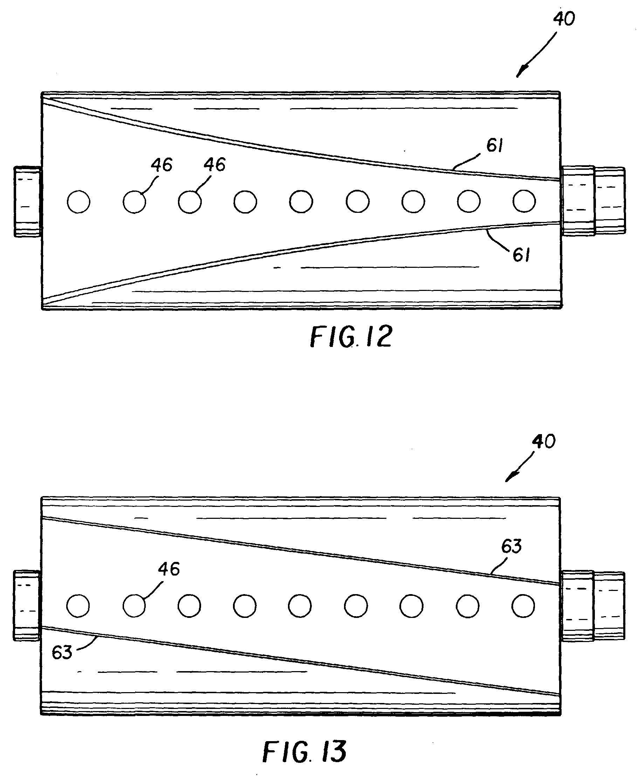

Figs. 9-13 show variations in the edge configuration for vacuum port 50. In Fig. 9, edge 55 is a curved shape. The overall appearance presented by edge 55 is concave. Fig. 10 is similar to Fig. 9, except the curving edges 57 present a generally convex appearance. In Fig. 11, straight edges 59 converge toward one end of drum 40, and in Fig. 12, curved edges 61 converge toward one end of drum 40. Fig. 13 shows an alternate embodiment wherein curved edges 63 are parallel and non-collinear with the axis of rotating outer drum 30. In all these vacuum port embodiments, the edges are configured so that vacuum holes in the rotating outer drum 30 will not be exposed simultaneously, but rather, sequentially.

The invention has been described in detail with particular reference to certain preferred embodiments thereof, but it will be understood that variations and modifications can be effected within the spirit and scope of the invention.

### PARTS LIST

- 10: slow scan module
- 12: drum
- 14: drum frame
- 15: exit guide finger
- 16: motor
- 18: shaft encoder
- 19: laser scan line
- 20: photographic paper
- 21: lead edge
- 22: servo control electronics
- 23: trail edge
- 24: vacuum source
- 30: outer drum
- 32: holes
- 33: axial grooves
- 34: radial grooves
- 35: exit guide grooves
- 40: inner drum
- 42: interior
- 44: small gap
- 46: port supply hole
- 50: helical edge vacuum port
- 51: edge
- 53: edge
- 54: narrow portion
- 55: edge
- 57: curving edges
- 59: straight edges
- 61: curved edges
- 63: curved edges

## Claims

1. A vacuum drum (12) comprising:
a stationary inner drum (40);
a vacuum port (50) recessed within a surface of said stationary inner drum connecting a vacuum maintained in an interior of said stationary inner drum to an outer surface of said stationary inner drum;
a rotating outer drum (30) sharing a common access with said stationary inner drum;
vacuum holes (32) connecting an outer surface of said rotating outer drum (30) with an inner surface of said rotating outer drum; and
wherein said vacuum port (50) has at least one edge which is not collinear with said axis.

2. A drum as in claim 1 wherein vacuum grooves connect said vacuum holes.

3. A drum as in claim 2 wherein said vacuum grooves are radial grooves.

4. A drum as in claim 1 wherein said at least one edge is linear.

5. A vacuum drum as in claim 1 wherein said at least one edge comprises a curve.

6. A vacuum drum as in claim 5 wherein said at least one edge comprises a non-linear curve.

7. A drum as in claim 1 wherein said vacuum port has a first edge and a second edge and said second edge is located an equal distance from first edge.

8. A vacuum drum (12) comprising:
a stationary inner drum (40);
a vacuum port (50) recessed within a surface of said stationary inner drum (40) connecting a vacuum maintained in an interior of said stationary inner drum (40) to an outer surface of said stationary inner drum (40);
a rotating outer drum (30) sharing a common access with said stationary inner drum (40);
vacuum holes (32) connecting an outer surface of said rotating outer drum (30) with an inner surface of said rotating outer drum (30); and
wherein said vacuum port (50) has at least one edge aligned to expose said vacuum holes sequentially as said rotating outer drum rotates.
